# EUROPEAN PATENT SPECIFICATION

(11) **EP 3 514 407 B1**
(45) Date of publication and mention of the grant of the patent: **15.04.2026**
(21) Application number: 19152666.4
(22) Date of filing: 18.01.2019
(51) Int. Cl.: F16H 57/04, B25F 5/00, H02K 9/06, F16H 57/021, F16H 1/28

(54) **POWER TOOL**
ELEKTROWERKZEUG
OUTIL ÉLECTRIQUE

(30) Priority: 23.01.2018 US 201862620542 P
(43) Date of publication of application: 24.07.2019
(73) Proprietor: Milwaukee Electric Tool Corporation, Brookfield, WI 53005 (US)
(72) Inventor: Dedrickson, Ryan A., Sussex, WI 53089 (US); Duncan, Ian, Milwaukee, WI 53202 (US); Reichert, Timothy R, Franklin, WI 53132 (US)
(74) Representative: Marks & Clerk LLP

(56) References cited:
- WO-A1-2005/062444
- CN-U- 205 141 921
- DE-A1- 1 932 880
- DE-A1- 102017 108 653
- DE-A1- 102017 211 773
- GB-A- 2 268 112
- JP-A- 2007 006 554
- US-A- 5 634 274
- US-A1- 2013 075 121
- US-B1- 6 543 549
- US-B2- 9 844 869

## Description

### FIELD OF THE INVENTION

The present invention relates to power tools, and more particularly to power tool drive assemblies.

US 2013/075121 A1 relates to an impact tool. According to the abstract, there is disclosed an impact tool including: a motor; a housing that accommodates the motor; a hammer rotated by the motor in a rotating direction; an anvil struck by the hammer in the rotating direction; an end tool holding portion connected to the anvil and protruding from a front part of the housing; and a load receiving portion that receives a load of the hammer in a rear direction.

DE 10 2017 108 653 A1 relates to a driving device and power tool. According to the abstract, there is provided a driving device which includes a motor and a gearbox. The gearbox includes a sun gear, planetary gears surrounding and meshing with the sun gear, and an internal ring gear surrounding and meshing with the planetary gears. The motor is a single phase motor. The sun gear is integrally formed with a rotary shaft of the motor. A power tool is also disclosed which includes the driving device, a rotatable working head driven by the driving device, and a striking unit disposed between the driving device and the working head. By integrating the sun gear and the motor rotary shaft to form an integral gear shaft, the number of the teeth of the sun gear can be reduced to five or less. Therefore, the transmission ratio of the gearbox can be effectively increased without changing the maximum geometric outer diameter.

DE 1 932 880 A1 relates to a gear motor with front planetary gear.

DE 10 2017 211 773 A1 relates to a hand held power tool device. According to the abstract, the hand-held power tool device comprises: a drive unit that has a drive shaft; at least one rotary impact mechanism; and at least one cooling air unit which has at least one fan wheel situated between the drive unit and the rotary impact mechanism. According to the invention, the fan wheel and the rotary impact mechanism at least partially overlap in an axial direction.

US 9 844 869 B2 is concerned with a hand tool machine device. According to its abstract, US 9 844 869 B2 describes a hand tool machine device with a drive unit comprising at least one drive shaft, a transmission unit including at least one transmission element, a cooling unit including at least one fan element, and at least one sealing element configured to seal the transmission unit in at least on axial direction. The at least one fan element includes at least one receiving region configured to at least partially receive the at least one sealing element.

GB 2 268 112 A is concerned with an electric hand power tool. According to its abstract, GB 2 268 112 A describes that in order to facilitate assembly and disassembly of the motor in the event of repair, the motor pinion of a hand power tool is supported firmly in the casing. A cylinder portion of the motor shaft of motor is introduced into a longitudinal bore of the motor pinion in which it is engaged without play. Torque is transmitted via a toothing on the pinion and a mating toothing on the motor shaft. A sealing ring provides sealing relative to the electrical components of the motor. In a second embodiment motor shaft beam a tapered end portion on the central part of which is arranged a radially projecting mating toothing which meshes with a toothing of pinion.

US 5 634 274 A is concerned with a ventilating device in a power driven tool. According to its abstract, US 5 634 274 A describes a ventilating device in a power driven tool that has a fan driven by a motor for cooling the motor and has an air flow channel for the air to flow to the outside after passing around the motor. The ventilating device includes an air passage member disposed in the air flow channel on the downstream side of the fan to form a part of the air flow channel. The air passage member includes a plurality of blow windows and a plurality of partition walls for separating the blow windows from each other. The blow windows are positioned in series in the rotational direction of the fan. The partition walls have different heights relative to and in the direction toward the fan such that the heights increase in the rotational direction of the fan. US 6 543 549 B1 discloses a power tool comprising an electric motor including an output shaft ;a transmission including a transmission housing; a spindle rotatable in response to receiving torque from the transmission; the output shaft including a bushing portion,a toothed portion for driving the transmission, and a cylindrical portion between the bushing portion and the toothed portion; a fan coupled to the bushing portion of the pinion; and a bearing arranged between the cylindrical portion and the transmission housing for rotatably supporting the output shaft.

### BACKGROUND OF THE INVENTION

Power tools include electric motors having an output shaft to which a pinion is attached to transfer torque from the motor to a transmission. Fans are sometimes rotatably coupled to the output shaft to cool the motor as the output shaft rotates.

### SUMMARY OF THE INVENTION

Aspects of the present invention are defined by the appended independent claim. Preferred embodiments of the present invention are defined by the appended dependent claims.

Described herein is a power tool comprising an electric motor including an output shaft, a transmission including a transmission housing, a spindle rotatable in response to receiving torque from the transmission, and a pinion coupled to the output shaft. The pinion includes a bushing portion, a toothed portion for driving the transmission, and a cylindrical portion between the bushing portion and the toothed portion. The rotary power tool also includes a fan coupled to the bushing portion of the pinion and a bearing arranged between the cylindrical portion and the transmission housing for rotatably supporting the pinion and the output shaft.

The bearing may include an inner race that is coupled to the cylindrical portion and an outer race that is coupled to the transmission housing. The inner race may be press-fit or interference-fit to the cylindrical portion of the pinion. The outer race may be slip-fit to the transmission housing. The power tool may further comprise a plurality of rollers between the inner race and the outer race.

The bushing portion includes splines. The fan includes corresponding splines that engage the splines of the bushing portion.

The transmission may be a planetary transmission having a plurality of planet gears. The transmission housing may include an opening through which the toothed portion of the pinion extends. The toothed portion of the pinion may be configured as a sun gear that meshes with the planet gears. The transmission housing may define a recess in which the bearing is arranged. The recess may be adjacent the opening.

The pinion may be press-fit or interference-fit to the output shaft.

The pinion may be integrally formed with the output shaft

The transmission may be a planetary transmission having a plurality of planet gears. The transmission housing may include an opening through which the toothed portion of the pinion extends. The toothed portion of the pinion may be configured as a sun gear that meshes with the planet gears. The transmission housing may define a recess in which the bearing is arranged. The recess may be adjacent the opening.

Any of the optional features set out above may be employed in the power tool. Other features and aspects of the invention will become apparent by consideration of the following detailed description and accompanying drawings.

### BRIEF DESCRIPTION OF THE DRAWINGS

FIG. 1 is a schematic view of a power tool in accordance with an embodiment of the invention.
FIG. 2 is an enlarged cross-sectional view of the power tool of FIG. 1.
FIG. 2A is an enlarged plan view of the power tool along line 2A-2A in FIG. 2.
FIG. 3 is a perspective view of a pinion of the power tool of FIG. 1.
FIG. 4 is an enlarged cross-sectional view of the power tool of FIG. 1, according to another embodiment of the invention.

Before any embodiments of the invention are explained in detail, it is to be understood that the invention is not limited in its application to the details of construction and the arrangement of components set forth in the following description or illustrated in the following drawings. The invention is defined by the appended independent claim. Also, it is to be understood that the phraseology and terminology used herein is for the purpose of description and should not be regarded as limiting.

### DETAILED DESCRIPTION

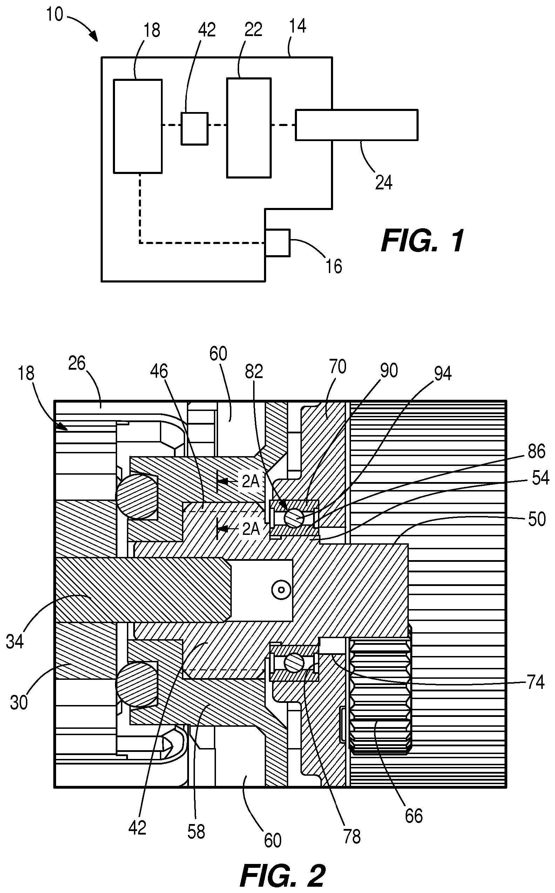

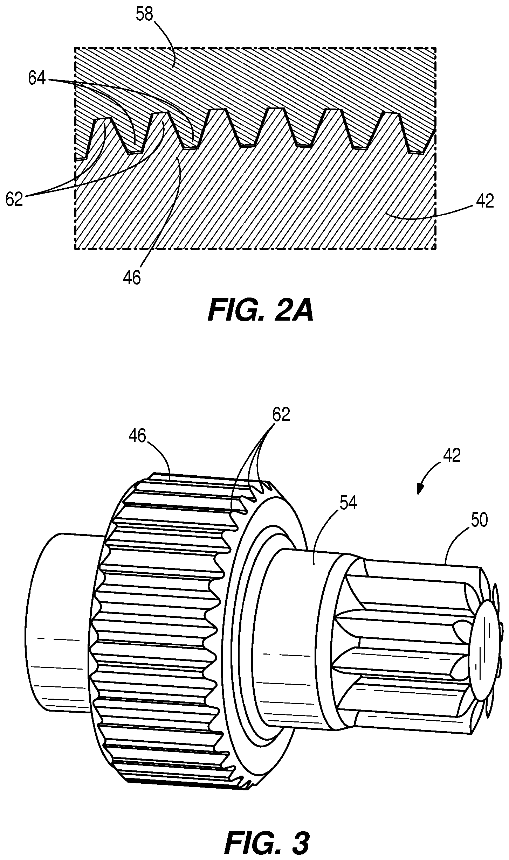

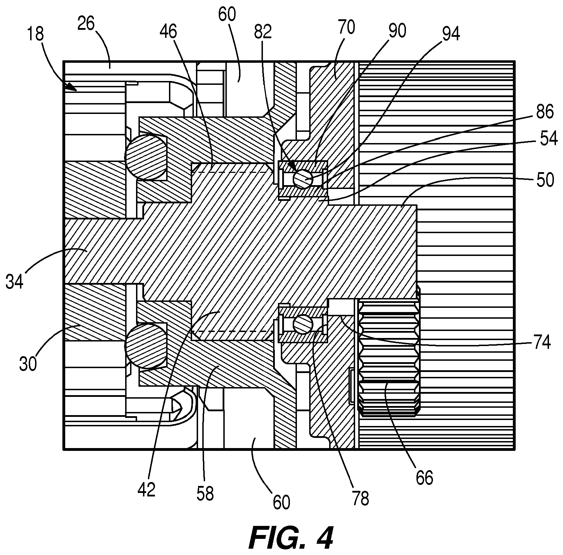

As shown schematically in FIG. 1, a power tool, such as a rotary power tool 10, includes a housing 14, a trigger 16 on the housing 14, an electric motor 18, a multi-stage planetary transmission 22, and a spindle 24 that receives torque from the motor 18 via the transmission 22 when an operator presses the trigger 16. As shown in FIG. 2, the motor 18 includes a stator 26 and a rotor 30. In the illustrated embodiment, the rotor 30 includes a motor output shaft 34 extending from the stator 26 and a pinion 42 is coupled for co-rotation with the motor output shaft 34 (e.g., by an interference fit, a press-fit, etc.). In other embodiments such as the one shown in FIG. 4, the pinion 42 is integrally formed with the output shaft 34.

As shown in FIGS. 2 and 3, the pinion 42 includes a bushing portion 46, a toothed portion 50, and a cylindrical portion 54 between the bushing portion 46 and the toothed portion 50. The bushing portion 46 is configured to rotatably couple a fan 58 having blades 60 to the pinion 42. In the illustrated embodiment, the bushing portion 46 includes splines 62 and the fan 58 includes corresponding splines 64 that engage the splines 62 of the bushing portion 46 as shown in FIG. 2A, thereby ensuring co-rotation of the fan 58 and the pinion 42. The toothed portion 50 is configured as a sun gear that is meshed with multiple planet gears 66 of the multi-stage planetary transmission 22. The transmission 22 includes a transmission housing 70 that has an opening 74 through which the toothed portion 50 of the pinion 42 extends.

On a side of the transmission housing 70 facing the motor 18, the transmission housing 70 defines a recess 78 for receiving a bearing 82 having an inner race 86, an outer race 90, and a plurality of rollers 94 between the inner and outer races 86, 90. The bearing 82 is arranged on the cylindrical portion 54 of the pinion 42 for rotatably supporting the pinion 42 and the output shaft 34 on the transmission housing 70, which in turn is supported by the power tool housing 14. In some embodiments, the inner race 86 is interference or press-fit to the cylindrical portion 54 and the outer race 90 is slip-fit to the transmission housing 70 within the recess 78.

In operation, an operator presses the trigger 16 of the power tool 10, which activates the motor 18 and causes the output shaft 34 and the pinion 42 to rotate. The fan 58 is also caused to rotate via its connection with the bushing portion 46, resulting in the blades 60 creating a cooling airflow through the motor 18. As the pinion 42 rotates, the rotating toothed portion 50 drives the planet gears of the transmission 22, ultimately causing the spindle 24 to rotate in response to receiving torque from the transmission 22.

Various features of the invention are set forth in the following claims.

## Claims

1. A power tool (10) comprising:
an electric motor (18) including an output shaft (34);
a transmission (22) including a transmission housing (70);
a spindle (24) rotatable in response to receiving torque from the transmission (22);
a pinion (42) coupled to the output shaft (34), the pinion (42) including
a bushing portion (46) including splines (62),
a toothed portion (50) for driving the transmission (22), and
a cylindrical portion (54) between the bushing portion (46) and the toothed portion (50);
a fan (58) including corresponding splines (64) engaged with the splines (62) of the bushing portion (46) of the pinion (42); and
a bearing (82) arranged between the cylindrical portion (54) and the transmission housing (70) for rotatably supporting the pinion (42) and the output shaft (34).

2. The power tool (10) of claim 1, wherein the bearing (82) includes an inner race (86) that is coupled to the cylindrical portion (54) and an outer race (90) that is coupled to the transmission housing (70).

3. The power tool (10) of claim 2, wherein the inner race (86) is press-fit or interference-fit to the cylindrical portion (54) of the pinion (42).

4. The power tool (10) of claim 2 or 3, wherein the outer race (90) is slip-fit to the transmission housing (70).

5. The power tool (10) of claim 2, 3 or 4, further comprising a plurality of rollers (94) between the inner race (86) and the outer race (90).

6. The power tool (10) of any preceding claim, wherein the transmission (22) is a planetary transmission having a plurality of planet gears (66).

7. The power tool (10) of claim 6, wherein the transmission housing (70) includes an opening (74) through which the toothed portion (50) of the pinion (42) extends, and wherein the toothed portion (50) of the pinion (42) is configured as a sun gear that meshes with the planet gears (66).

8. The power tool (10) of claim 7, wherein the transmission housing (70) defines a recess (78) in which the bearing (82) is arranged, and wherein the recess (78) is adjacent the opening (74).

9. The power tool (10) of any preceding claim, wherein the pinion (42) is press-fit or interference-fit to the output shaft (34).

## Patentansprüche

1. Elektrowerkzeug (10), umfassend:
einen Elektromotor (18) einschließlich einer Abtriebswelle (34);
ein Getriebe (22) einschließlich eines Getriebegehäuses (70);
eine Spindel (24), die als Reaktion auf das Aufnehmen von Drehmoment von dem Getriebe (22) drehbar ist;
ein mit der Abtriebswelle (34) gekoppeltes Ritzel (42), wobei das Ritzel (42) einschließt
einen Reduzierringabschnitt (46) einschließlich Kerbverzahnungen (62),
einen gezahnten Abschnitt (50) zum Antreiben des Getriebes (22) und
einen zylindrischen Abschnitt (54) zwischen dem Reduzierringabschnitt (46) und dem gezahnten Abschnitt (50);
einen Lüfter (58) einschließlich entsprechenden Kerbverzahnungen (64), die mit den Kerbverzahnungen (62) des Reduzierringabschnitt (46) des Ritzels (42) in Eingriff vorliegen; und
ein Lager (82), das zwischen dem zylindrischen Abschnitt (54) und dem Getriebegehäuse (70) angeordnet ist, zum drehbaren Halten des Ritzels (42) und der Abtriebswelle (34).

2. Elektrowerkzeug (10) nach Anspruch 1, wobei das Lager (82) einen Innenring (86), der mit dem zylindrischen Abschnitt (54) gekoppelt ist, und einen Außenring (90) einschließt, der mit dem Getriebegehäuse (70) gekoppelt ist.

3. Elektrowerkzeug (10) nach Anspruch 2, wobei der Innenring (86) mit dem zylindrischen Abschnitt (54) des Ritzels (42) in Presspassung oder Übermaßpassung vorliegt.

4. Elektrowerkzeug (10) nach Anspruch 2 oder 3, wobei der Außenring (90) mit dem Getriebegehäuse (70) in Gleitpassung vorliegt.

5. Elektrowerkzeug (10) nach Anspruch 2, 3 oder 4, weiter umfassend eine Vielzahl von Rollen (94) zwischen dem Innenring (86) und dem Außenring (90).

6. Elektrowerkzeug (10) nach einem vorstehenden Anspruch, wobei das Getriebe (22) ein Planetengetriebe mit einer Vielzahl von Planetenrädern (66) ist.

7. Elektrowerkzeug (10) nach Anspruch 6, wobei das Getriebegehäuse (70) eine Öffnung (74) einschließt, durch die sich der gezahnte Abschnitt (50) des Ritzels (42) erstreckt, und wobei der gezahnte Abschnitt (50) des Ritzels (42) als ein Sonnenrad konfiguriert ist, das mit den Planetenrädern (66) kämmt.

8. Elektrowerkzeug (10) nach Anspruch 7, wobei das Getriebegehäuse (70) eine Aussparung (78) definiert, in der das Lager (82) angeordnet ist, und wobei die Aussparung (78) an die Öffnung (74) angrenzt.

9. Elektrowerkzeug (10) nach einem vorstehenden Anspruch, wobei das Ritzel (42) mit der Abtriebswelle (34) in Presspassung oder Übermaßpassung vorliegt.

## Revendications

1. Outil électrique (10) comprenant :
un moteur électrique (18) incluant un arbre de sortie (34) ;
une transmission (22) incluant un carter de transmission (70) ;
une broche (24) pouvant tourner à la suite de la réception d'un couple provenant de la transmission (22) ;
un pignon (42) couplé à l'arbre de sortie (34), le pignon (42) incluant
une partie de bague (46) incluant des cannelures (62),
une partie dentée (50) pour entraîner la transmission (22), et
une partie cylindrique (54) entre la partie de bague (46) et la partie dentée (50) ;
un ventilateur (58) incluant des cannelures correspondantes (64) en prise avec les cannelures (62) de la partie douille (46) du pignon (42) ; et
un palier (82) agencé entre la partie cylindrique (54) et le carter de transmission (70) pour supporter en rotation le pignon (42) et l'arbre de sortie (34).

2. Outil électrique (10) selon la revendication 1, dans lequel le palier (82) inclut une bague de roulement interne (86) qui est couplée à la partie cylindrique (54), et une bague de roulement externe (90) qui est couplée au carter de transmission (70).

3. Outil électrique (10) selon la revendication 2, dans lequel la bague de roulement interne (86) est ajustée par pression ou par interférence à la partie cylindrique (54) du pignon (42).

4. Outil électrique (10) selon la revendication 2 ou 3, dans lequel la bague de roulement externe (90) est ajustée par glissement au carter de transmission (70).

5. Outil électrique (10) selon la revendication 2, 3 ou 4, comprenant en outre une pluralité de rouleaux (94) entre la bague de roulement interne (86) et la bague de roulement externe (90).

6. Outil électrique (10) selon une quelconque revendication précédente, dans lequel la transmission (22) est une transmission planétaire comportant une pluralité d'engrenages planétaires (66).

7. Outil électrique (10) selon la revendication 6, dans lequel le carter de transmission (70) inclut une ouverture (74) par laquelle la partie dentée (50) du pignon (42) passe, et dans lequel la partie dentée (50) du pignon (42) est configurée comme un engrenage solaire qui s'engrène avec les engrenages planétaires (66).

8. Outil électrique (10) selon la revendication 7, dans lequel le carter de transmission (70) délimite un évidement (78) dans lequel le palier (82) est agencé, et dans lequel l'évidement (78) est adjacent à l'ouverture (74).

9. Outil électrique (10) selon une quelconque revendication précédente, dans lequel le pignon (42) est ajusté par pression ou par interférence à l'arbre de sortie (34).
